# EUROPÄISCHE PATENTSCHRIFT

(11) **EP 2 753 666 B1**
(45) Veröffentlichungstag und Bekanntmachung des Hinweises auf die Patenterteilung: **08.04.2020**
(21) Anmeldenummer: 12753503.7
(22) Anmeldetag: 04.09.2012
(51) Int. Cl.: C09D 5/32, C01G 41/02, C04B 41/00

(54) **INFRAROTSTRAHLUNG ABSORBIERENDE WEISSE UND HELLE FARBEN**
INFRARED-ABSORBING WHITE AND LIGHT-COLOURED PAINTS
RAYONNEMENT INFRAROUGE ABSORBANT LE BLANC ET LES COULEURS CLAIRES

(30) Priorität: 06.09.2011 US 201161531111 P; 06.09.2011 EP 11180273
(43) Veröffentlichungstag der Anmeldung: 16.07.2014
(73) Patentinhaber: BASF SE, 67056 Ludwigshafen am Rhein (DE)
(72) Erfinder: REISACHER, Hans Ulrich, 67133 Maxdorf (DE); MAUTHE, Uwe, 68239 Mannheim (DE); FREY, Thomas, 68723 Schwetzingen (DE); KNISCHKA, Ralf, 67434 Neustadt (DE)
(74) Vertreter: Altmann, Andreas
(86) Internationale Anmeldenummer: PCT/EP2012/067177
(87) Internationale Veröffentlichungsnummer: WO 2013/034533

(56) Entgegenhaltungen:
- WO-A2-2010/046285
- WO-A2-2011/005631
- DE-A1- 19 650 300

## Beschreibung

Die vorliegende Erfindung betrifft pigmentierte Beschichtungsstoffe enthaltend mindestens ein anorganisches Weißpigment und mindestens ein Infrarotstrahlung absorbierendes Material in einem Gehalt von 0,01 bis 5 Gew.-%, bezogen auf das anorganische Weißpigment, wobei es sich bei dem pigmentierten Beschichtungsstoff um eine Fassadenfarbe oder einen Putz handelt, wobei der pigmentierte Beschichtungsstoff 3 bis 20 Gew.-% anorganisches Weißpigment, bezogen auf den pigmentierten Beschichtungsstoff, enthält, und wobei das Infrarotstrahlung absorbierende Material eine Wolframbronze ist.

Algen und Pilze sind in der Natur weit verbreitet. Auf Fassaden angesiedelt bewirken sie, dass die Oberflächen ein unansehnliches schwarz-grünes Aussehen bekommen. Sie treten vor allem dort sichtbar in Erscheinung, wo sie günstige Lebensbedingungen für Wachstum und Vermehrung vorfinden. Dazu gehört insbesondere Feuchtigkeit und Licht. Ein Faktor, der den Befall von Fassaden mit Algen begünstigt, ist die Tauwasserbildung an Fassadenoberflächen.

Tagsüber wird die Fassadenoberfläche von Gebäuden durch die Sonneneinstrahlung erwärmt. Dadurch sinkt die relative Luftfeuchte an der Oberfläche und Feuchtigkeit kann verstärkt von der Oberfläche der Fassade verdampfen, gegebenenfalls kann die Fassade trocknen. In der Nacht fehlt die solare Einstrahlung. Dadurch sinkt die Außentemperatur, und die oberflächennahe relative Luftfeuchte steigt an. Sinkt die Oberflächentemperatur der Fassade zu tief, nämlich unter den Taupunkt, so kondensiert Tauwasser auf der Fassade.

Durch die immer bessere Isolierung von Gebäuden wird die Oberfläche von Außenfassaden immer weniger von innen erwärmt. Dadurch sinkt die Oberflächentemperatur der Fassade nachts schneller ab, und die Taupunkttemperatur wird häufiger und länger unterschritten als bei ungedämmten Gebäuden. Zudem wird einmal gebildete Feuchtigkeit nur langsamer wieder abgegeben.

Diese Effekte bewirken eine deutliche Änderung der mikro- und kleinklimatischen Verhältnisse auf der Oberfläche von Wänden.

Durch den Einsatz von Bioziden (Algizide und Fungizide) in Beschichtungsstoffen lässt sich der Befall von Algen und Pilzen wirkungsvoll verhindern bzw. mindestens deutlich verzögern.

Biozide müssen wasserlöslich sein, damit sie von Mikroorganismen aufgenommen werden können. Bedingt durch ihre Löslichkeit werden sie über einen kürzeren oder längeren Zeitraum aus dem Beschichtungsmaterial ausgewaschen und gelangen in den Boden oder das Abwasser, wo sie das Zooplankton negativ beeinflussen. Weiterhin wird die Verwendung von Bioziden in Innen- und Außenfarben durch gesetzliche Regelungen immer weiter eingeschränkt.

Daher werden Alternativen zum Einsatz von Bioziden in Beschichtungsstoffen gesucht.

WO 95/32251 A1 offenbart Anstrichstoffe mit niedrigem Emissionsvermögen bzw. hohem Reflexionsvermögen im Bereich der Wärmestrahlung. Anstrichstoffe gemäß WO 95/32251 A1 sind dadurch gekennzeichnet, dass in ein Bindemittel hoher Transparenz im Bereich der Wärmestrahlung Teilchen eingebracht werden, die eine hohe Transparenz in diesem Wellenlängenbereich aufweisen und deren Brechungsindex im Wellenlängenbereich der Wärmestrahlung von dem Brechungsindex des Bindemittels verschieden ist.

EP 1 676 890 A1 offenbart Dispersionen von feinen Partikeln von Wolframbronzen sowie deren Verwendung als Abschirmungsmaterial für Infrarotstrahlung.

WO 2009/059900 A2 offenbart die Verwendung von Wolframoxiden oder Wolframbronzen beim Laserschweißen von Kunststoffen, beim Aushärten von Lacken durch Infrarotstrahlung, beim Trocknen von Druckfarben, beim Fixieren von Tinte und für die Lasermarkierung von Kunststoffen oder Papier.

DE 196 50 300 offenbart weißen, bevorzugt hellen Anstrichstoffe im Außen- und/oder Innenbereich, die ein hohes Absorptionsvermögen für solare Strahlung haben.

WO 2011/005631 A2 und WO 2010/046285 A2 offenbaren die Verwendung von Wolframbronze-Partikel als IR-Absorber in Bandbeschichtungen.

Aufgabe der vorliegenden Erfindung war es, pigmentierte Beschichtungsstoffe bereit zu stellen, die bei außen liegenden Oberflächen einen Beitrag zur Verminderung des Befalls von Fassaden durch Algen leisten können.

Die Aufgabe wurde gelöst durch die eingangs genannten pigmentierten Beschichtungsstoffe.

Als pigmentierte Beschichtungsstoffe werden im Sinne dieser Erfindung Stoffe gemäß DIN EN ISO 4618, Kapitel 2.167 verstanden. Diese werden auch als Anstrichstoffe, Farbe oder englisch "paint" bezeichnet. Nicht von dem Begriff pigmentierte Beschichtungsstoffe umfasst sind dagegen Lacke wie Bandbeschichtungen (coil coating).

Bevorzugt handelt es sich bei den pigmentierten Beschichtungsstoffen um Fassadenfarben oder Putze.

Erfindungsgemäße pigmentierte Beschichtungsstoffe enthalten mindestens ein anorganisches Weißpigment gemäß DIN 55944.

Geeignete anorganische Weißpigmente sind zum Beispiel Titandioxid in der Anatas oder Rutilmodifikation (C.I. Pigment White 6), Zinkweiß oder Calciumcarbonat.

Bevorzugt wird als Weißpigment Titandioxid (C.I. Pigment White 6) verwendet.

Weißpigmente sind in den erfindungsgemäßen pigmentierten Beschichtungsstoffen typischerweise mit einem Anteil von 3 bis 20 Gew.-%, jeweils bezogen auf den pigmentierten Beschichtungsstoff. In einer Ausführungsform sind sie zu 5 bis 10 Gew.-% enthalten.

Als weitere Komponente enthalten erfindungsgemäße pigmentierte Beschichtungsstoffe Infrarotstrahlung absorbierende Materialien. Als Infrarotstrahlung wird in diesem Zusammenhang Strahlung mit einer Wellenlänge von 700 nm bis 2500 nm angesehen. In der Regel handelt es sich bei der durch die erfindungsgemäßen pigmentierten Beschichtungsstoffe absorbierten Strahlung um Sonnenstrahlung.

Geeignete Infrarotstrahlung absorbierende Materialien zeigen im Bereich der Infrarotstrahlung eine Absorption von mindestens 30%, bevorzugt von mehr als 50%, besonders bevorzugt von mindestens 60% der einfallenden Strahlung.

In einer besonders bevorzugten Ausführungsform handelt es sich bei geeigneten Infrarotstrahlung absorbierende Materialien um solche Materialien, die bei einer 2,5 Gew.-%igen Pigmentierung eines pigmentierten Beschichtungsstoffes mindestens 90% der (solaren) Strahlung im Bereich von 700 bis 2500 nm absorbiert, gleichzeitig aber die Absorption im sichtbaren Bereich von 400 bis 700 nm kleiner als 80% ist. Bevorzugt werden Absorptionsraten bereits bei einer Pigmentierung von 1 Gew.-% oder 0,5 Gew.-% erreicht.

Die Infrarotstrahlung absorbierende Materialien sind Wolframbronzen. Wolframbronzen sind dem Fachmann an sich bekannt.

In einer bevorzugten Ausführungsform der Erfindung sind Infrarotstrahlung absorbierende Materialien Wolframbronzen der allgemeinen Formel MₓW_{y}O_{z}, wobei M eines oder mehrere Elemente ausgewählt aus H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, Tl oder NH₄ sein kann, wobei das Verhältnis x/y einen Wert von 0,001 bis 1 ergibt und wobei das Verhältnis von z/y einen Wert von 2,00 bis 3,00 ergibt.

Bevorzugt ist y = 1, so dass bevorzugt x eine Zahl von 0,001 bis 1 ist, und z eine Zahl von 2,00 bis 3,00 ist.

In einer bevorzugten Ausführungsform sind Infrarotstrahlung absorbierende Materialien Verbindungen der Formel Na_{0,2-0,8}WO₃ und Cs_{0,2-0,5}WO₃, besonders bevorzugt sind Verbindungen der Formel Na_{0.33}WO₃, K_{0.33}WO₃, Cs_{0.29}O₃, Ba_{0.33}WO₃, K_{0.24}Cs_{0.15}WO₃, Rb_{0.33}WO₃, und WO_{2,7}.

Geeignete Infrarotstrahlung absorbierende Materialien liegen bevorzugt als nanopartikuläre Partikel vor. Bevorzugt liegen geeignete Infrarotstrahlung absorbierende Materialien in Form von Partikeln mit einer mittleren Teilchengröße von 1 nm bis 1000 nm, bevorzugt 5 bis 500 nm und besonders bevorzugt 10 bis 400 nm und insbesondere bevorzugt 20 bis 100 nm (bestimmt durch Elektronenmikroskopie).

Erfindungsgemäße pigmentierte Beschichtungsstoffe enthalten Infrarotstrahlung absorbierende Materialien in einer Menge von 0,01 bis 5 Gew.-%, bezogen auf das Weißpigment, bevorzugt 0,1 bis 3 Gew.-% und besonders bevorzugt 0,3 bis 2 Gew.-%, jeweils bezogen auf das Weißpigment.

Es ist ein überraschendes Ergebnis dieser Erfindung, dass beim Zusatz Infrarotstrahlung absorbierender Materialien gemäß der Erfindung keine nennenswerte Änderung des Farbtons oder von dessen Brillianz auftritt, obwohl in vielen Fällen geeignete Infrarotstrahlung absorbierende Materialien wie Wolframbronzen eine starke Eigenfarbe haben.

Insbesondere Wolframbronzen zeigen jedoch bei hoher Absorption von Infrarotstrahlung nur unsignifikante Änderungen des Farbtons der Fassadenfarbe.

Erfindungsgemäße pigmentierte Beschichtungsstoffe sind in der Regel weiß oder haben einen anderen hellen Farbton. Als ein heller Farbton sei in diesem Zusammenhang ein Farbton verstanden, der einen Helligkeitswert L* von mindestens 60, bevorzugt mindestens 75 aufweist (gemäß DIN 55981, bestimmt zum Beispiel mittels Farbmessgerät Spectraflash SF 600, Datocolor eines getrockneten 200 µm Naßfilms auf einem Leneta Schwarz-weiß-Kontrastkarton).

Pigmentierte Beschichtungsstoffe, die einen von weiß verschiedenen Farbton haben, enthalten als weitere Bestandteile Buntpigmente nach DIN 55944. Die Art der Buntpigmente ist für die erfindungsgemäßen Pigmentpräparationen nicht entscheidend. Geeignete Buntpigmente können organisch oder anorganisch sein. Bevorzugt handelt es sich um anorganische Buntpigmente.

Geeignete organische Buntpigmente sind zum Beispiel die in Herbst, Hunger, Industrielle Organische Pigmente, Wiley VCH, 2. Auflage 1995, S. 4 bis 587 genannten.

Geeignete anorganische Buntpigmente sind zum Beispiel die in Buxbaum, Pfaff, Industrial Inorganic Pigments, Wiley VCH, 3. Auflage 2005, S. 99 bis 195 genannten.

Geeignete organische Buntpigmente sind zum Beispiel:
- Monoazopigmente: C.I. Pigment Brown 25; C.I. Pigment Orange 5, 13, 36, 38, 64 und 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; C.I. Pigment Yellow 1, 3, 62, 65, 73, 74, 97, 120, 151, 154, 168, 181, 183 und 191; C.I. Pigment Violet 32;
- Disazopigmente: C.I. Pigment Orange 16, 34, 44 und 72; C.I. Pigment Yellow 12, 13, 14, 16, 17, 81, 83, 106, 113, 126, 127, 155, 174, 176, 180 und 188;
- Disazokondensationspigmente: C.I. Pigment Yellow 93, 95 und 128; C.I. Pigment Red 144, 166, 214, 220, 221, 242 und 262; C.I. Pigment Brown 23 und 41;
- Anthanthronpigmente: C.I. Pigment Red 168;
- Anthrachinonpigmente: C.I. Pigment Yellow 147, 177 und 199; C.I. Pigment Violet 31;
- Anthrapyrimidinpigmente: C.I. Pigment Yellow 108;
- Chinacridonpigmente: C.I. Pigment Orange 48 und 49; C.I. Pigment Red 122, 202, 206 und 209; C.I. Pigment Violet 19;
- Chinophthalonpigmente: C.I. Pigment Yellow 138;
- Diketopyrrolopyrrolpigmente: C.I. Pigment Orange 71, 73 und 81; C.I. Pigment Red 254, 255, 264, 270 und 272;
- Dioxazinpigmente: C.I. Pigment Violet 23 und 37; C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigment Orange 61 und 69; C.I. Pigment Red 260; C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257; C.I. Pigment Yellow 117, 129, 150, 153 und 177; C.I. Pigment Green 8;
- Perinonpigmente: C.I. Pigment Orange 43; C.I. Pigment Red 194;
- Perylenpigmente: C.I. Pigment Black 31 und 32; C.I. Pigment Red 123, 149, 178, 179, 190 und 224; C.I. Pigment Violet 29;
- Phthalocyaninpigmente: C.I. Pigment Blue 15, 15:1, 15:2,15:3, 15:4,15:6 und 16; C.I. Pigment Green 7 und 36;
- Pyranthronpigmente: C.I. Pigment Orange 51; C.I. Pigment Red 216;
- Pyrazolochinazolonpigmente: C.I. Pigment Orange 67; C.I. Pigment Red 251;
- Thioindigopigmente: C.I. Pigment Red 88 und 181; C.I. Pigment Violet 38;
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27;
- C.I. Pigment Yellow 101 (Aldazingelb);
- C.I. Pigment Brown 22.

Geeignete anorganische Buntpigmente sind zum Beispiel:
Chromoxid, Chromoxidhydratgrün; Chromgrün (C.I. Pigment Green 48); Cobaltgrün (C.I. Pigment Green 50); Ultramaringrün;
Kobaltblau (C.I. Pigment Blue 28 und 36; C.I. Pigment Blue 72); Ultramarinblau; Manganblau; Ultramarinviolett; Kobalt- und Manganviolett;
Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
Cersulfid (C.I. Pigment Orange 75);
Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Für die Durchführung der Erfindung ist der Farbton nicht wesentlich. Bevorzugte Farbtöne sind jedoch helle Rot- oder Gelbtöne.

In erfindungsgemäßen pigmentierten Beschichtungsstoffen sind die Pigmente und Infrarotstrahlung absorbierende Materialien in einem Lösungsmittel dispergiert. In der Regel sind erfindungsgemäße pigmentierte Beschichtungsstoffe wasserverdünnbar. Bevorzugt ist das Lösungsmittel Wasser oder ein Gemisch von Wasser mit organischen Lösungsmitteln. Die Verwendung ausschließlich nicht-wässriger Lösungsmittel ist möglich, jedoch weniger bevorzugt.

Erfindungsgemäße pigmentierte Beschichtungsstoffe können noch weitere Materialien zur Beeinflussung der Oberflächentemperatur enthalten. Beispiele für weitere geeignete Materialien zur Temperatursteuerung von Oberflächen sind zum Beispiel Latentwärmespeicher auf der Basis sogenannter Phase Change Materials wie sie von der Firma BASF unter dem Handelsnamen Micronal® vertrieben werden, Mikrohohlkugeln auf der Basis von Keramik oder Glas oder Metall- oder Effektpigmente für niedrig emittierende Farben.

Erfindungsgemäße pigmentierte Beschichtungsstoffe enthalten häufig noch weitere Bestandteile, um die Eigenschaften an die Bedürfnisse der Anwendungen und der Anwender anzupassen. So können erfindungsgemäße pigmentierter Beschichtungsstoffe beispielsweise oberflächenaktive Additive, Lichtstabilisatoren, Antioxidantien, Antiflockungsmittel, Füllstoffe, Biozide, Entschäumer, Verdicker, Wasserrückhaltemittel enthalten. Derartige Zusätze für pigmentierte Beschichtungsstoffe sind dem Fachmann bekannt und für die Ausführung der Erfindung in der Regel nicht wesentlich.

Bevorzugt handelt es sich bei den erfindungsgemäßen pigmentierten Beschichtungsstoffen um Fassadenfarben oder Putze. Bevorzugt handelt es sich um wasserverdünnbare Anstrichstoffe für Außenanwendungen auf Acrylat-, Styrolacrylat-, Polyurethan-, Polyester-, Alkyd- oder Siliconharzbasis oder um Silikatfarben.

Als Putze werden im Rahmen dieser Erfindung Beschichtungen oder Beläge von Wänden oder Decken oder Dächern mit Putzmörtel verstanden, wie sie in DIN 18550 beschrieben werden. Bevorzugt handelt es sich um Außenputze und hier wiederum um Oberputze.

Geeignete Putzarten können mineralisch gebundene oder organisch gebundene Putze sein. Geeignete Putzarten sind zum Beispiel Lehmputze, Kalkputze, Kalkzementputze, Gipsputze, Gips-Kalk-Putze oder Gips-Kalk-Zementputze.

Organische gebundene Putze enthalten in der Regel organische Bindemittel, die zum Beispiel Kunstharze auf der Basis von Dispersionen, gegebenenfalls mit Anteilen von Silikonharz oder Wasserglas oder anderen Silikaten sein können.

Die Oberflächengestaltung der Putze ist erfindungsgemäß in der Regel nicht entscheidend, so kann es sich um Rauputze, Strukturputze, Reibeputze, Filzputze, Glättputze, Schlämmputze oder Schweißputze handeln.

In einer Ausführungsform handelt es sich bei Putzen um Wärmedämmputze.

Erfindungsgemäße pigmentierte Beschichtungsstoffe sind in der Lage Infrarotstrahlung gut zu absorbieren, obwohl sie einen weißen oder hellen Farbton haben und ermöglichen es so, dass die Gegenstände und Oberflächen, die mit ihnen beschichtet sind, Wärme besser aufnehmen können. Dadurch wird in einigen Fällen das Unterschreiten des Taupunktes bei Temperaturschwankungen vermieden, so dass der Befall der Oberflächen mit Schimmel oder Algen vermindert wird.

Erfindungsgemäße pigmentierte Beschichtungsstoffe zeichnen sich weiterhin durch eine gute Homogenität aus. Insbesondere und überraschenderweise setzen sich Infrarotstrahlung absorbierende Materialien bei Lagerung des pigmentierten Beschichtungsstoffes nicht ab.

Erfindungsgemäße pigmentierte Beschichtungsstoffe sind zur Beschichtung jedweder Oberflächen geeignet. Bevorzugt werden sie zur Beschichtung von Oberflächen von Gebäuden oder Oberflächen von unbeweglichen Oberflächen verwendet. Insbesondere sind sie zur Beschichtung von mineralischen Baustoffen wie Beton, Zement, Mörtel, Putzen, Ziegelsteinen oder sonstigem Mauerwerk geeignet. Die Oberfläche der Baustoffe kann gegebenenfalls zuvor bereits mit anderen Beschichtungsstoffen beschichtet worden sein.

Erfindungsgemäße pigmentierte Beschichtungsstoffe eignen sich besonders zur Beschichtung von Fassaden, Außenwänden oder Dächern.

### Beispiele

### Verwendete Materialien

Fassadenfarbe 1: handelsübliche Fassadenfarbe auf Basis einer wässrigen Polymerdispersion auf Acrylsäureester- und Styrolbasis mit einem TiO₂-Gehalt von 16,3 Gew.-%.

Fassadenfarbe 2: handelsübliche Fassadenfarbe auf der Basis von Siliconharzen mit einem TiO₂-Gehalt von 17,5 Gew.-%.

Fassadenfarbe 3: handelsübliche Fassadenfarbe auf Silikatbasis mit einem TiO₂ Gehalt von 15,2 Gew.-%.

Fassadenfarbe 4: handelsübliche Fassadenfarbe auf Silikat-Siliconharz Basis mit einem TiO₂-Gehalt von 13,2 Gew.-%.
IR Absorber 1: Wolframbronze mit 0,29 mol% Cs und einer mittleren Partikelgröße von 50 nm
IR Absorber 2: Wolframbronze mit 0,33 mol% Na und einer mittleren Partikelgröße von 100 nm
IR Absorber 3: Wolframbronze mit 0,24 mol% K und 0,15 mol% Cs und einer mittleren Partikelgröße von 50 nm
IR Absorber 4: Feste Pigmentpräparation enthaltend 80 Gew.-% Eisenoxid Schwarz
IR Absorber 5: Feste Pigmentpräparation enthaltend 80 Gew.-% Ruß, mittlere Partikelgröße 40 nm

### Mittlere Partikelgrößen bestimmt durch Elektronenmikroskopie

### Allgemeine Arbeitsvorschrift zum Einarbeiten der IR Absorber in die Fassadenfarben

Verschiedene Fassendenfarben wurden mit IR Absorbern in der gewünschten Menge vermischt. Zu dieser Mischung wurden Glasperlen mit 3 mm Durchmesser gegeben (ca. die Hälfte der eingesetzten Masse der Fassadenfarbe). Die Einarbeitung erfolgt durch 60-minütiges Dispergieren der IR Absorber durch einen Skandex-Schüttler vom Typ BA-S 20 der Fa. Lau. Anschließend wurden die Glasperlen durch Filtration über ein Sieb abgetrennt.

### Allgemeine Arbeitsvorschrift zur Herstellung der Weißaufhellungen

Die gegebenenfalls mit IR Absorber versetzten Fassadenfarben wurden auf Karton aufgetragen, der zur Hälfte schwarz und weiß gefärbt war (Hersteller Lenata Co. Mahwah, NJ; Form 2A, 140 x 254 mm). Der Auftrag erfolgte mit einem Filmziehgerät vom Typ Coatmaster 509MC der Firma Erichsen Testing Equipment mit einem 200 µm Rakel. Nach dem Rakeln wurde der Karton ca. 30 Minuten bei Raumtemperatur getrocknet.

### Allgemeine Arbeitsvorschrift Messung der Koloristik

Die farbmetrische Vermessung der zu püfenden Bleche erfolgte nach dem Spektralverfahren in Anlehnung an DIN 55981 ("Relativer Farbanstrich von nahezu weißen Proben") unter Lichtart D65/10° mit einem Farbmessgerät vom Typ Spectraflash SF600 der Firma Datacolor GmbH.

### Allgemeine Arbeitsvorschrift zur Messung der Wärmeaufnahme der Fassadenfarben

Vorbeschichtete Prüfplatten aus Faserzement (5 x 20 cm) wurden mit den bereitgestellten Fassadenfarben deckend bestrichen und trocknen gelassen.

Die so präparierten Faserzementplatten wurden mit einer 1000 W Halogenlampe in einem Abstand von 60 cm bestrahlt und mittels eines Temperatursensors die Temperatur auf der Oberseite der Platten gemessen. Nach einer Bestrahlungszeit von 300 bis 600 Minuten wurden insgesamt ca. 10 Messungen vorgenommen, von denen anschließend der Mittelwert gebildet wurde.

### Beispiel 1: Koloristik und Wärmeaufnahme einer mit IR Absorber versetzten Fassadenfarbe

Fassadenfarbe 3 wurde gemäß der allgemeinen Arbeitsvorschrift mit IR Absorber 1 in verschiedenen Mengen versehen.

Von den erhaltenen Proben wurden die Koloristik und die Wärmeaufnahme bestimmt.

| Gehalt an W-Bronze in Farbe | T[°C] | d T[°C] | da | db | dE |
|---|---|---|---|---|---|
| Vergleich undotiert ("Nullprobe") | 38 | 0 | Vergleich | | |
| 50 ppm | 42 | 4 | 0,0 | -0,9 | 0,9 |
| 100 ppm | 42 | 4 | -0,2 | -1,2 | 1,3 |
| 250 ppm | 44 | 6 | -0,3 | -1,4 | 1,5 |
| 500 ppm | 46 | 8 | -0,5 | -1,9 | 2,3 |
| 1000 ppm | 48 | 10 | -0,8 | -2,4 | 3,5 |
| 2500 ppm | 51 | 13 | -1,4 | -3,4 | 6,1 |

Die blau - schwarz gefärbten Wolframbronzen haben keinen signifikanten Einfluss auf die Koloristik einer weißen Farbe. Erst ab einer Zugabemenge von 2500 ppm zu der weißen Farbe wird eine leichte Graufärbung mit einem dE von 6,1 gemessen.

Bereits durch Zugabe von 50 ppm Wolframbronze wird ein signifikanter Anstieg der Oberflächentemperatur von 4°C erhalten. Durch Erhöhung der Zugabemengen lässt sich die Temperaturerhöhung der Oberfläche um über 10°C steigern.

Analoge Versuche mit Ruß oder Eisenoxidpigmenten wurden nicht quantitativ ausgewertet, da der Farbton der Fassadenfarbe augenscheinlich nicht mehr weiß, sondern grau war.

Um die Eignung dieser Wolframbronzen für Außenanwendungen zu testen, wurden die dotierten Farben einer Schnellbewitterung von 2000 h unterzogen und einer weiteren Messung sowohl der Oberflächentemperatur als auch der Remissionsspektren unterzogen. Überraschenderweise erfolgt kein Abbau der W-Bronze, sodass diese Bronzen uneingeschränkt für Außenanwendungen mit einer langen Lebensdauer eingesetzt werden können. Die Remissionskurven und die Temperaturmessungen nach 2000 h Schnellbewitterung zeigen keine Unterschiede zu den Messungen vor der Bewitterung.

### Beispiel 2: Koloristik einer Silikatfarbe in Abhängigkeit von der Dotierungshöhe

Fassadenfarbe 3 wurde gemäß der allgemeinen Arbeitsvorschrift mit verschiedenen IR Absorbern in verschiedenen Mengen dotiert. Von den erhaltenen Proben wurde gemäß der allgemeinen Arbeitsvorschrift die Koloristik bestimmt.

| | L* | ΔL* |
|---|---|---|
| Undotierte Nullprobe | 96,90 | |
| 50 ppm IR Absorber 1 | 97,07 | 0,2 |
| 100 ppm IR Absorber 1 | 96,78 | -0,1 |
| 200 ppm IR Absorber 1 | 96,53 | -0,4 |
| 250 ppm IR Absorber 1 | 96,43 | -0,5 |
| 500 ppm IR Absorber 1 | 95,91 | -1,0 |
| 1000 ppm IR Absorber 1 | 94,93 | -2,0 |
| 2500 ppm IR Absorber 1 | 92,51 | -4,5 |
| 50 ppm IR Absorber 3 | 96,91 | 0,0 |
| 100 ppm IR Absorber 3 | 96,66 | -0,2 |
| 200 ppm IR Absorber 3 | 96,56 | -0,4 |
| 250 ppm IR Absorber 3 | 96,42 | -0,5 |
| 500 ppm IR Absorber 3 | 95,63 | -1,3 |
| 1000 ppm IR Absorber 3 | 94,50 | -2,5 |
| 2500 ppm IR Absorber 3 | 91,97 | -5,1 |

### Beispiel 3: Koloristik verschiedener Weißfarben dotiert mit 1000 ppm IR Absorber

Verschiedene Fassadenfarben wurden gemäß der allgemeinen Arbeitsvorschrift mit je 1000 ppm verschiedener IR Absorber dotiert. Von den erhaltenen Proben wurden gemäß der allgemeinen Arbeitsvorschrift die Koloristik bestimmt.

| | TiO₂-Gehalt | Koloristik Weißfarbe | Dotierung mit 1000 ppm IR Absorber 1 | | Dotierung mit 1000 ppm IR Absorber 3 | | Dotierung mit 1000 ppm IR Absorber 2 | |
|---|---|---|---|---|---|---|---|---|
| | [%] | L* | L* | ΔL* | L* | ΔL* | L* | ΔL* |
| Fassadenfarbe 2 | 17,5 | 96,49 | 93,00 | -3,5 | 93,18 | -3,3 | 91,26 | -5,2 |
| Fassadenfarbe 1 | 16,3 | 95,88 | 90,56 | -5,3 | 91,13 | -4,8 | | |
| Fassadenfarbe 3 | 15,2 | 96,70 | 93,48 | -3,2 | 93,33 | -3,4 | 91,28 | -5,4 |
| Fassadenfarbe 4 | 13,2 | 94,52 | 90,48 | -4,0 | 90,82 | -3,7 | | |

| | TiO₂-Gehalt | Koloristik Weißfarbe | Dotierung mit 1000 ppm IR Absorber 4 | | Dotierung mit 1000 ppm IR Absorber 5 | |
|---|---|---|---|---|---|---|
| | [%] | L* | L* | ΔL* | L* | ΔL* |
| Fassadenfarbe 2 | 17,5 | 96,49 | | | | |
| Fassadenfarbe 1 | 16,3 | 95,88 | | | | |
| Fassadenfarbe 3 | 15,2 | 96,70 | 86,83 | -9,9 | 69,67 | -26,7 |
| Fassadenfarbe 4 | 13,2 | 94,52 | | | | |

### Beispiel 4: Wärmeaufnahme einer Silikatfarbe bei verschiedenen Dotierungshöhen

Fassadenfarbe 3 wurde gemäß der allgemeinen Arbeitsvorschrift mit verschiedenen IR Absorbern in verschiedenen Mengen dotiert. Von den erhaltenen Proben wurde gemäß der allgemeinen Arbeitsvorschrift die Wärmeaufnahme bestimmt.

| Probenbezeichnung | Temperatur nach Belichtung | ΔT_{Erwärmung} bzgl. Blindprobe |
|---|---|---|
| | [°C] | [K] |
| Undotierte Nullprobe | 37,9 | 0 |
| 50 ppm IR Absorber 1 | 41,8 | 4 |
| 100 ppm IR Absorber 1 | 42,2 | 5 |
| 200 ppm IR Absorber 1 | 43,7 | 6 |
| 250 ppm IR Absorber 1 | 44,3 | 5 |
| 500 ppm IR Absorber 1 | 45,8 | 8 |
| 1000 ppm IR Absorber 1 | 48,6 | 9 |
| 2500 ppm IR Absorber 1 | 51,0 | 12 |
| 50 ppm IR Absorber 3 | 40,6 | 3 |
| 100 ppm IR Absorber 3 | 41,0 | 4 |
| 200 ppm IR Absorber 3 | 41,4 | 4 |
| 250 ppm IR Absorber 3 | 43,7 | 5 |
| 500 ppm IR Absorber 3 | 45,7 | 7 |
| 1000 ppm IR Absorber 3 | 46,4 | 7 |
| 2500 ppm IR Absorber 3 | 51,3 | 13 |

### Beispiel 5: Einfluss von Bewitterung auf die Koloristik einer Silikatfarbe bei verschiedenen Dotierungshöhen

Fassadenfarbe 3 wurde gemäß der allgemeinen Arbeitsvorschrift mit verschiedenen IR Absorbern dotiert und gemäß der allgemeinen Arbeitsvorschrift zur Messung der Wärmeaufnahme auf Etaplan Platten aufgetragen. Die Proben wurden anschließend in einem Schnellbewitterer vom Typ Xenotest 1200 der Firma Heraeus für 2200 Stunden einer Kurzbewitterung nach DIN EN ISO 4892-2 (Gleichlauf) unterzogen. Anschließend wurde gemäß der allgemeinen Arbeitsvorschrift die Koloristik der Prüfplatten vermessen.

| | **L* vor Bewitterung** | **L* nach Bewitterung** | **ΔL*** |
|---|---|---|---|
| Undotierte Nullprobe | 96,90 | 97,03 | 0,13 |
| 50 ppm IR Absorber 1 | 97,07 | 97,16 | 0,09 |
| 100 ppm IR Absorber 1 | 96,78 | 96,86 | 0,08 |
| 200 ppm IR Absorber 1 | 96,53 | 96,72 | 0,19 |
| 250 ppm IR Absorber 1 | 96,43 | 96,69 | 0,26 |
| 500 ppm IR Absorber 1 | 95,91 | 96,30 | 0,39 |
| 1000 ppm IR Absorber 1 | 94,93 | 95,70 | 0,77 |
| 2500 ppm IR Absorber 1 | 92,51 | 94,23 | 1,72 |
| 50 ppm IR Absorber 3 | 96,91 | 96,98 | 0,07 |
| 100 ppm IR Absorber 3 | 96,66 | 96,83 | 0,17 |
| 200 ppm IR Absorber 3 | 96,56 | 96,75 | 0,19 |
| 250 ppm IR Absorber 3 | 96,42 | 96,40 | -0,02 |
| 500 ppm IR Absorber 3 | 95,63 | 96,06 | 0,43 |
| 1000 ppm IR Absorber 3 | 94,50 | 95,43 | 0,93 |
| 2500 ppm IR Absorber 3 | 91,97 | 93,77 | 1,80 |

### Beispiel 6: Wärmeaufnahme einer Silikatfarbe nach Bewitterung bei verschiedenen Dotierungshöhen

Die Proben aus Beispiel 6 wurden nach der Bewitterung gemäß der allgemeinen Arbeitsvorschrift zur Messung der Wärmeaufnahme bestrahlt und die Temperatur gemessen. Es ergab sich im Vergleich zu den unbewitterten Prüfplatten keine signifikante Abweichung der Temperaturzunahme gegenüber der Blindprobe.

## Patentansprüche

1. Pigmentierter Beschichtungsstoff enthaltend mindestens ein anorganisches Weißpigment und mindestens ein Infrarotstrahlung absorbierendes Material in einem Gehalt von 0,01 bis 5 Gew.-%, bezogen auf das anorganische Weißpigment, wobei es sich bei dem pigmentierten Beschichtungsstoff um eine Fassadenfarbe oder einen Putz handelt,
wobei der pigmentierte Beschichtungsstoff 3 bis 20 Gew.-% anorganisches Weißpigment, bezogen auf den pigmentierten Beschichtungsstoff, enthält, und
wobei das Infrarotstrahlung absorbierende Material eine Wolframbronze ist.

2. Pigmentierter Beschichtungsstoff nach mindestens einem der vorstehenden Ansprüche, wobei der pigmentierte Beschichtungsstoff weiß oder hellfarbig ist, wobei hellfarbig ein heller Farbton bedeutet, der einen Helligkeitswert L* von mindestens 60 aufweist, gemäß DIN 55981.

3. Pigmentierter Beschichtungsstoff nach mindestens einem der vorstehenden Ansprüche, wobei das Infrarotstrahlung absorbierende Material in Form von Partikeln mit einer mittleren Teilchengröße von 1 bis 1000 nm, bestimmt durch Elektronenmikroskopie, vorliegt.

4. Pigmentierter Beschichtungsstoff nach mindestens einem der vorstehenden Ansprüche, wobei das anorganische Weißpigment Titandioxid ist.

5. Verwendung von pigmentierten Beschichtungsstoffen nach mindestens einem der vorstehenden Ansprüche für Außenanwendungen.

## Claims

1. A pigmented coating material comprising at least one inorganic white pigment and at least one infrared radiation (IR)-absorbing material in an amount of 0.01 to 5% by weight, based the inorganic white pigment, the pigmented coating material being a masonry paint or a render, the pigmented coating material comprising 3% to 20% by weight of inorganic white pigment, based on the pigmented coating material, and the IR-absorbing material being a tungsten bronze.

2. The pigmented coating material according to at least one of the preceding claims, being white or light-colored, light-colored meaning a light color tone which has a lightness value L* of at least 60, according to DIN 55981.

3. The pigmented coating material according to at least one of the preceding claims, the IR-absorbing material being present in the form of particles with an average size of 1 to 1000 nm, determined by electron microscopy.

4. The pigmented coating material according to at least one of the preceding claims, the inorganic white pigment being titanium dioxide.

5. The use of a pigmented coating material according to at least one of the preceding claims for exterior applications.

## Revendications

1. Revêtement pigmenté contenant au moins un pigment blanc inorganique et au moins un matériau absorbant le rayonnement infrarouge en une teneur de 0,01 à 5 % en poids, par rapport au pigment blanc inorganique, le revêtement pigmenté étant une peinture pour façades ou un enduit, le revêtement pigmenté contenant 3 à 20 % en poids de pigment blanc inorganique, par rapport au revêtement pigmenté, et le matériau absorbant le rayonnement infrarouge étant un bronze de tungstène.

2. Revêtement pigmenté selon au moins l'une des revendications précédentes, le revêtement pigmenté étant blanc ou clair, « clair » signifiant un ton de couleur claire, qui présente une valeur de clarté L* d'au moins 60, selon la norme DIN 55981.

3. Revêtement pigmenté selon au moins l'une des revendications précédentes, le matériau absorbant le rayonnement infrarouge étant présent sous forme de particules dotées d'une grosseur moyenne de particule de 1 à 1 000 nm, déterminée par microscopie électronique.

4. Revêtement pigmenté selon au moins l'une des revendications précédentes, le pigment blanc inorganique étant le dioxyde de titane.

5. Utilisation de revêtements pigmentés selon au moins l'une des revendications précédentes pour des applications extérieures.
